# EUROPÄISCHE PATENTANMELDUNG

(11) **EP 1 231 036 A2**
(43) Veröffentlichungstag der Anmeldung: **14.08.2002**
(21) Anmeldenummer: 01125010.7
(22) Anmeldetag: 19.10.2001
(51) Int. Cl.: B26D 1/18, B26D 7/01

(54) **Vorrichtung zum Abtrennen von streifen- oder bandförmigen Materialien in Montagemaschinen**

(30) Priorität: 20.10.2000 DE 20017965 U
(71) Anmelder: EMTEC Magnetics GmbH, 67059 Ludwigshafen (DE)
(72) Erfinder: Schlatter, Manfred, Dr., 79111 Freiburg (DE); Kraus, Manfred, 77694 Kehl (DE); Scheidecker, Richard, 77866 Rheinau (DE)

(57) **Zusammenfassung**

Vorrichtung zum Abtrennen streifen- oder bandförmiger Medien in Montagemaschinen, vorzugsweise Magnetband in Einspulautomaten, im wesentlichen bestehend aus einer pneumatischen Linearführungseinheit (1,12) mit angebauten Hubbegrenzungseinheiten, wobei am Schlitten (11), dessen lineare Bewegungsrichtung quer zur Bewegungsrichtung des Magnetbands verläuft, ein Halter (7) angebracht ist, an dessen einem Ende ein Rundmesser (2) mittels kraftschlüssiger Verbindung auf einer über die Wälzlager (6,6') rotierbar gelagerten Welle (3) fixiert ist, wobei die Linearbewegung des Schlittens (11) mittels Konstruktionselementen in eine Rotationsbewegung des Rundmessers (2) umgewandelt wird und wobei das Rundmesser (2) das Magnetband querschneidet, während das Band auf einem Saugtisch festgehalten wird.

## Beschreibung

Die Neuerung betrifft eine Vorrichtung zum Abtrennen streifen- oder bandförmiger Medien in Montagemaschinen, vorzugsweise Magnetband in Einspulautomaten.

Streifen- oder bandförmige Medien werden im allgemeinen aus Wirtschaftlichkeitsgründen in größerer Breite als die Breite des Endproduktes produziert, insbesondere dann, wenn sie mit einer Funktionsschicht versehen werden. Als mit Funktionsschicht versehene Medien werden beispielsweise Klebebänder, Kondensatorfolien und insbesondere bandförmige magnetische Aufzeichnungsträger verstanden. Nach der Beschichtung des Trägermaterials mit der Funktionsschicht erfolgt das Trennen auf Gebrauchsbreite in Schneid- oder Trennmaschinen und anschließend das Aufwickeln auf Wickelkerne oder Spulen. Der so entstandene Rohwickel weist eine Bandlänge von mehreren tausend Metern auf und wird, wenn das bandförmige Medium ein magnetischer Aufzeichnungsträger ist, als Pancake bezeichnet und stellt das Zwischenprodukt für die Endverarbeitung des Mediums zur bespielten oder auch unbespielten Kassette dar.

Das Einspulen des Magnetbandes in Kassetten geschieht vorzugsweise auf sogenannten Einspulautomaten, in Fachkreisen auch als Loader bekannt.

Die Loader arbeiten wesentlich wirtschaftlicher als die früher üblichen Winder. Die Verwendung von Loadern setzt die Benutzung von sogenannten vorkonfektionierten Kassetten voraus. Während bei der früheren Windertechnik die weiter zu verarbeitende Bandeinheit aus einer mit Magnetband bewickelten Spule und einer Leerspule, wobei die beiden Spulen über das an den Enden des Magnetbandes angebrachten Vorspannband miteinander verbunden waren, bestand, und diese Einheit danach mit den gesamten Kassetteneinzelteilen zusammen montiert werden mußte, wird in den Loader eine fertig montierte Kassette eingelegt. Diese vorkonfektionierte Kassette enthält außer den beiden Leerspulen auch bereits das sogenannte Vorspannband, wobei dessen Enden an den Spulen befestigt sind. Das Vorspannband selbst besteht aus einem Streifen durchsichtiger Folie, ähnlich der Magnetbandträgerfolie, wobei die Breite des Vorspannbandes der Breite des einzuspulenden Magnetbandes entspricht. Die Gesamtlänge des Vorspannbandes entspricht der Summe der Längen des Vorspannbandes am Anfang und am Ende des Bandes einer Kassette.

Vor dem Einspulen des Magnetbandes wird das Vorspannband von einem Mechanismus des Loaders aus der Kassette erfaßt und aus der Kassette herausgezogen. Dieser Mechanismus des Loaders ist in etwa dem Mechanismus eines Videorecorders ähnlich, der das Magnetband zum Aufnehmen oder Abspielen einer Information ebenfalls aus der Kassette herausfädeln muß. Nachdem das Vorspannband aus der Kassette herausgezogen ist, wird das Vorspannband von einem Saugtisch, dessen Oberfläche Bohrungen besitzt, die mit Unterdruck beaufschlagt sind, festgehalten und mittig am Saugtisch quer zur eigentlichen Bandlaufrichtung durchgetrennt. Anschließend wird der Anfang des einzuspulenden Magnetbandes mit einem nun freien Ende des Vorspannbandes durch einen kurzes Stück Klebeband verbunden, und zwar auf der Kassettenseite, welche die volle Spule enthalten soll.

Nun wird die gewünschte Länge Band von dem zuvor erwähnten Pancake abgewickelt und in die Kassette eingespult, d. h. in die eine Spule der Kassette gewikkelt.

Nachdem die vorgegebene Bandlänge in die Kassette eingespult ist, wird das vom Pancake kommende Magnetband am Saugtisch fixiert, abgeschnitten und das Ende des eingespulten Magnetbandes mit dem anderen Ende des vorher durchtrennten Vorspannbandes wieder durch ein kurzes Stück Klebeband verbunden. Der nun freie Anfang der Magnetbandrolle wird durch einen Saugtisch mit Unterdruck festgehalten und liegt somit zum nächsten Einspulvorgang bereit.

Die Qualität der Verbindungen von Vorspannband und Magnetband, die auch einen Einfluß auf das fehlerfreie Verhalten der Magnetbandkassette im späteren Gebrauch hat, hängt unter anderem von der Qualität des Schnitts durch das Magnetband ab. Ein unsauberer Schnitt kann eine Ansammlung von Partikeln von der Schnittkante bedeuten und diese Partikel können während des Gebrauchs der Kassette auf der Magnetbandoberfläche verteilt werden und sogenannte Dropouts verursachen. Dropouts sind kurze Aussetzer der Informationsübermittlung beim Schreiben oder Lesen, also bei der Datenübertragung zwischen Magnetkopf und Band, verursacht durch kurzzeitige Vergrößerung des Abstandes Band/Kopf, je nach Größe des Partikels.

Alle handelsüblichen Loader besitzen eine oder mehrere Abschneidevorrichtungen, die entweder das Magnetband, das Klebeband oder das Vorspannband durchtrennen oder die sowohl eine als auch mehrere dieser Funktionen gleichzeitig erfüllen. Zweckmäßigerweise wird für das Klebeband eine separate Schneidvorrichtung verwendet, um zu verhindern, dass sich Kleberreste des Klebebandes am Messer festsetzen und beim Durchtrennen des Magnetbandes an diesem wieder ablagern. Dadurch könnten Partikel aus der Umgebung oder durch eine Bewegung der Einspulvorrichtung erzeugt, an der Klebestelle festgehalten werden, sich beim Aufwikkeln über die Länge des Bandes verteilen und so wieder Dropouts erzeugen. Normalerweise ist es jedoch möglich und wegen der räumlichen Nähe der Schneidstelle im Loader zweckmäßig, sowohl das Vorspannband als auch das Magnetband mit derselben Abschneidevorrichtung zu durchtrennen.

Bei handelsüblichen Loadern sind in der Regel Abschneidevorrichtungen nach drei verschiedenen Prinzipien integriert, wie sie teilweise auch zum Abschneiden der Bänder in Magnetbandschneidmaschinen verwendet werden, wenn das abzuschneidende Band seine vorgewählte Länge erreicht hat.

Das Magnetband kann mit zwei sich senkrecht zur Ober- und Unterseite des Magnetbandes parallel aufeinander zu bewegenden Schneiden getrennt werden, die ähnlich einer Stanze das Magnetband durchtrennen.

Außerdem sind Systeme bekannt, die mit einer scharfen Schneide, z. B. mit einer Rasierklinge arbeiten. Bei diesen Systemen ist die Klinge mit einer Neigung zwischen etwa 10° und 90° zur Magnetbandoberfläche angebracht und die Schneide bewegt sich zum Trennen quer zum Magnetband durch dieses hindurch.

Ein drittes bekanntes System arbeitet mit einer kleinen, druckluft- oder elektrisch betriebenen Schere, die sich im geöffneten Zustand von der Seite über das Magnetband bewegt, bis beide Schneiden die ganze Breite des Magnetbandes überdecken. Dann werden die Schneiden der Schere geschlossen, d. h. aufeinander zu und aneinander vorbei bewegt, wobei das Magnetband durchgetrennt wird.

Alle zuvor beschrieben Systeme haben den Nachteil, daß sie gelegentlich oder sogar häufig eine schlechte Schnittqualität liefern, die bereits aus konstruktiven Gründen systembedingt ist. Zwei stanzenähnliche Schneiden erzeugen nur gute Qualität, wenn die Breite des Schnittspalts, d. h. der Abstand der beiden Schneiden senkrecht zu ihrer Bewegungsrichtung und längs des zu schneidenden Bandes gemessen, im Bereich von einem Zehntel der Banddicke liegt. Bei den heute üblichen geringen Dicken von Magnetbändern von weniger als 20 µm würde dies bedeuten, daß ein Schnittspalt von weniger als etwa 2 µm reproduzierbar eingestellt werden müßte, was einen sehr großen Aufwand bedeuten und das Verfahren unwirtschaftlich machen würde.

Zur Bandoberfläche und sich quer zum Band bewegende Rasierklingen haben den Nachteil, daß sie versuchen, das Band seitlich wegzudrücken und dies um so mehr, je stumpfer die Klinge durch den Gebrauch geworden ist. Dadurch entsteht ein unsauberer, nicht gerader und mit Partikeln oder gar Falten behafteter Schnitt, der die Qualität der zu produzierenden Kassette deutlich vermindert. Solche Systeme erfordern einen erheblichen Überwachungs- und Wartungsaufwand.

Für kleine Scheren gelten die Aussagen wie für Rasierklingen in ähnlicher Weise, nur sind die seitlich auf das zu schneidende Magnetband wirkenden Kräfte geringer, da die Hauptbewegung der Schneiden nahezu senkrecht zur Oberfläche des Magnetbandes erfolgt.
Ein weiterer Nachteil aller beschriebenen Systeme ist die Tatsache, daß das Magnetband immer mit den selben Bereichen der Klinge bzw. der Schneide getrennt wird. Durch die in Magnetbändern enthaltenen harten und abrasiv wirkenden Stützpigmente, wie beispielsweise Aluminiumoxid, werden die benutzten Schneiden schnell stumpf und liefern eine schlechte Schnittqualität bzw. müssen sehr häufig ausgewechselt werden.
Es bestand daher die Aufgabe, den Schnitt, der vor bzw. nach dem Einspulen des Magnetbandes dieses auf die gewünschte Länge trennt, mit bestmöglicher Qualität herzustellen, d. h. ohne Erzeugung von Partikeln durch den Schnitt selbst infolge unzureichender Schneidtechnologie. Auf die notwendige Schärfe des Messers muß bei allen Systemen gleichermaßen geachtet werden. Dies gilt sowohl für die herkömmlichen Systeme als auch für das Messer der hier vorliegenden Neuerung.

Die Aufgabe wurde gelöst mit einer Vorrichtung zum Abtrennen streifen- oder bandförmiger Medien in Montagemaschinen, vorzugsweise Magnetband in Einspulautomaten, im wesentlichen bestehend aus einer pneumatischen Linearführungseinheit (12) mit angebauten Hubbegrenzungseinheiten, wobei am Schlitten (11), dessen Bewegungsrichtung quer zur Bewegungsrichtung (V) des Magnetbands (20) verläuft, ein Halter (7) angebracht ist und wobei an dessen einem Ende ein Rundmesser (2) mittels eines Klemmrings (5) auf einer Welle (3), die über die Wälzlager (6, 6') rotierbar gelagert, geklemmt ist, und wobei die Linearbewegung des Schlittens (11) mittels Konstruktionselementen in eine Rotationsbewegung des Rundmessers (2) umgewandelt wird.

Die Neuerung wird nun anhand der Zeichnungen näher beschrieben.

Die Zeichnungen zeigen in
- Fig. 1:: eine schematische Draufsicht einer ersten Ausführung der Vorrichtung
- Fig. 2:: eine schematische Seitenansicht einer ersten Ausführung der Vorrichtung
- Fig. 3:: einen Schnitt A-B durch eine erste Ausführung der Vorrichtung nach Fig. 1
- Fig. 4:: einen Schnitt A-B analog Fig. 3 durch eine zweite Ausführung der Vorrichtung

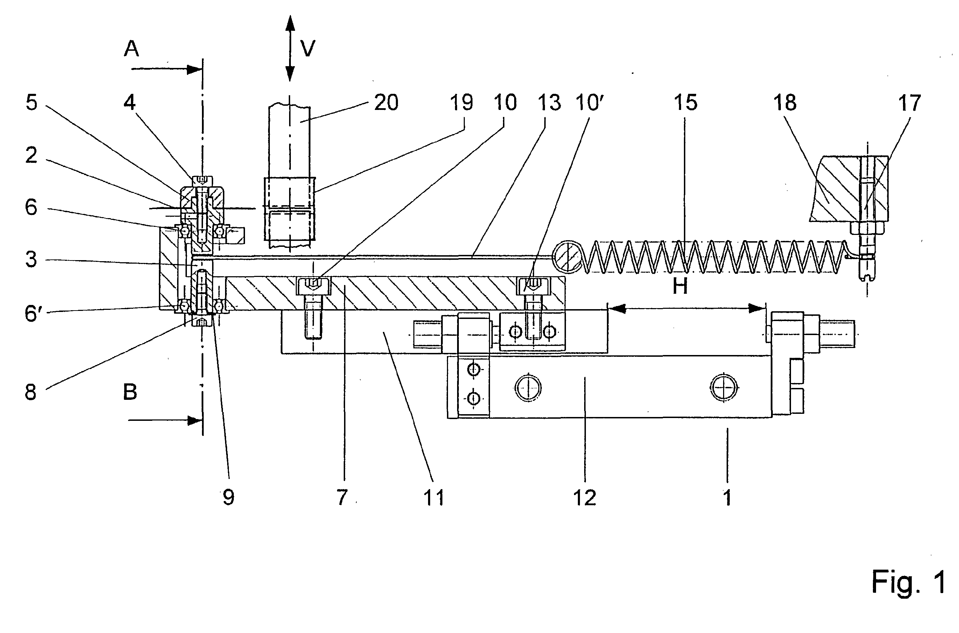

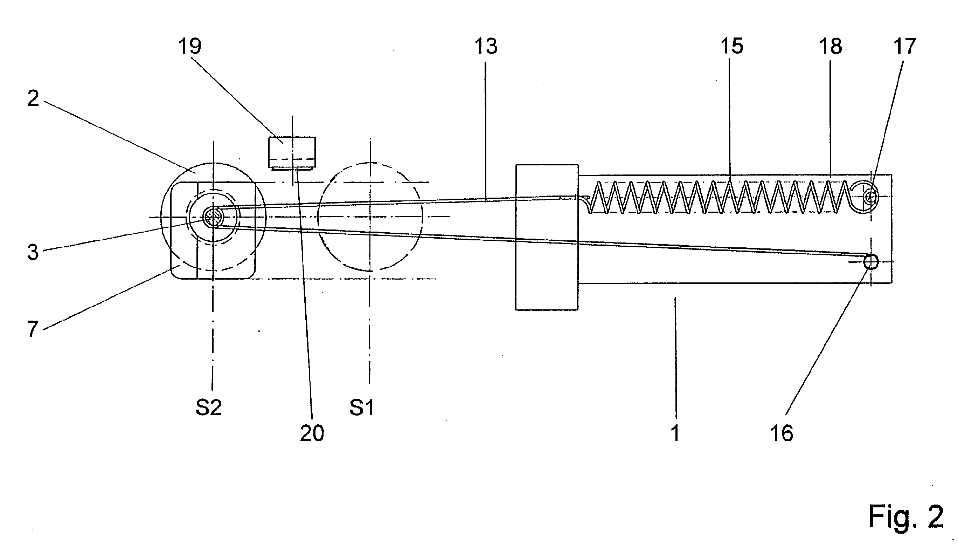

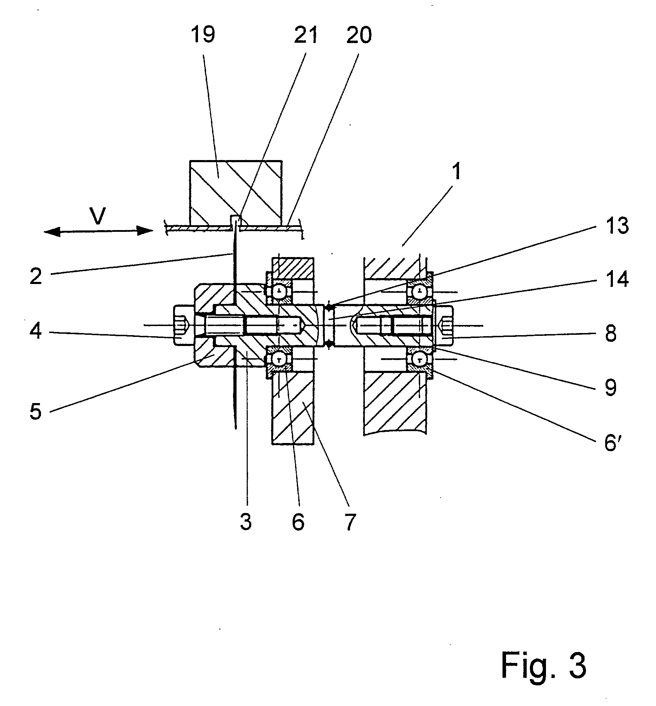

Figur 1 zeigt eine schematische Draufsicht einer ersten neuerungsgemäßen Vorrichtung (1) in ausgefahrenem Zustand des Schlittens (11), wobei die Bewegungsrichtung (V) des Magnetbandes (20) in dieser Ansicht vertikal von oben nach unten bzw. umgekehrt verläuft und das Magnetband (20) bereits getrennt eingezeichnet ist.
Wie weiterhin aus Fig. 1 und Fig. 3 ersichtlich, besteht die erste Ausführung der neuerungsgemäße Vorrichtung (1) im wesentlichen aus einem Rundmesser (2), welches mittels eines Klemmrings (5) und einer Schraube (4) auf einer Welle (3) befestigt ist, wobei die Abmessungen von Welle (3) und Klemmring (5) so gewählt sind, dass die in die Welle (3) eingeschraubte Schraube (4) auf den Klemmring (5) und dieser so auf das Rundmesser (2) drückt, so dass das Rundmesser (2) mittels kraftschlüssiger Verbindung auf der Welle (3) fixiert ist. Die Welle (3) ist mittels zweier Wälzlager (6, 6') in den Aufnahmebohrungen des Halters (7) rotierbar gelagert, wobei die Lager (6, 6') mittels der Schraube (8) und einer Paßscheibe (9) nahezu spielfrei einstellbar sind, die Welle (3) aber noch leicht drehbar bleibt. Der Halter (7) ist mit zwei Schrauben (10, 10') am Schlitten (11) einer pneumatischen Linearführungseinheit (12), der das Rundmesser (2) von Stellung (S1) in Stellung (S2), wie in Fig. 2 dargestellt, bewegt, befestigt. Mit Stellung (S1) ist die Ruhestellung des Rundmessers (2) vor dem Schnitt und mit Stellung (S2) die Endstellung des Rundmessers (2) nach dem Schnitt bezeichnet, wobei der hierbei zurückgelegte Weg der Hub (H) ist. Anstelle der pneumatischen Linearführungseinheit (12) ist beispielsweise auch ein pneumatisch betätigter Zylinder oder jedes andere eine Linearbewegung erzeugendes Bauteil verwendbar.

Figur 2 zeigt die schematische Seitenansicht einer ersten Ausführung der Vorrichtung im ausgefahrenem Zustand (Stellung S2) des Rundmessers (2) nach dem Schnitt. Die gestrichelt gezeichnete Stellung (S1) zeigt die Ruhestellung des Rundmessers (2) während des Einspulens des Magnetbandes (20) in die Kassette. Die Bewegungsrichtung (V) des Magnetbandes (20) beim Einspulen ist hierbei senkrecht zur Zeichenebene. Um den Schnurverlauf deutlich erkennbar zu machen, wurde in dieser Ansicht auf die Darstellung der pneumatischen Linearführungseinheit (12) verzichtet und der Halter (7) ist nur teilweise gezeigt.

Figur 3 zeigt einen Schnitt A-B durch eine erste Ausführung der Vorrichtung nach Fig. 1. Die Bewegungsrichtung (V) des Magnetbandes (20) beim Einspulen ist dabei von rechts nach links oder umgekehrt. Das Magnetband (20) läuft dabei über einen Saugtisch (19) mit einer Nut (21), welche so positioniert ist, dass das Rundmesser (2) diese während des Schneidvorgangs durchläuft.

Die Erzeugung der Rotationsbewegung des Rundmessers (2) erfolgt entsprechend den Darstellungen in Fig. 1 bis Fig. 3 mittels Konstruktionselementen die ein Schnur/Feder-System beinhalten, wobei eine Schnur (13) die Welle (3) in einer umlaufenden Nut (14) umschlingt und wobei das eine Ende der Schnur (13) mittels eines Stifts (16) an einer Montageplatte (18) auf der Frontplatte des Loadergehäuses befestigt ist und das andere Ende der Schnur mit einem Ende der Zugfeder (15) verbunden ist und wobei deren anders Ende wiederum mittels eines Stifts (17) an der Montageplatte (18) befestigt ist, so dass dadurch die quer zum Magnetband (20) verlaufende Bewegung des Schlittens (11) in eine Rotationsbewegung des Rundmessers umgewandelt wird. Entsprechend der dargestellten Ausführung der Vorrichtung sind hierbei Umschlingungswinkel der Schnur (13) auf der Welle (3) von vorzugsweise ca. 180° oder ca. 360° möglich.

Die Abmessungen der Feder (15) und der Schnur (13) sind so gewählt, dass in Stellung (S1) des Rundmessers (2) die Feder (15) soweit vorgespannt ist, dass die Schnur (13) in der Nut (14) der Welle (3) straff anliegt. Wird nun die pneumatische Linearführungseinheit (12) mit Druck beaufschlagt, so fährt der Schlitten (11) aus und das Rundmesser wird aus Stellung (S1) in Stellung (S2) bewegt, wobei die Feder (15) um die Länge des Hubs (H) zusätzlich gespannt, das Rundmesser (2) aufgrund der Anlenkgeometrie der Schnur (13) in eine Rotation entgegen dem Uhrzeigersinn versetzt und so das Magnetband (20) beim Durchlaufen des Rundmessers (2) durch den mit einer Nut (21) versehenen Saugtisch (19) getrennt wird. Entgegen den bisher bekannten Systemen liegt das Rundmesser während des Schnittes nicht an einer Schneidkante oder an einem rotierenden Gegenmesser an, sondern schneidet in den durch die Nut (21) gebildeten Freiraum, so dass ein sauberer Schnitt entsteht. Das pancakeseitige freie Ende des Magnetbandes (20) verbleibt auf dem Saugtisch (19) fixiert und steht für den nächsten Einspulvorgang zur Verfügung, während das andere Ende des Magnetbandes (20) mittels eines Klebestreifens mit den freien Ende des Vorspannbandes (nicht dargestellt) verbunden wird.

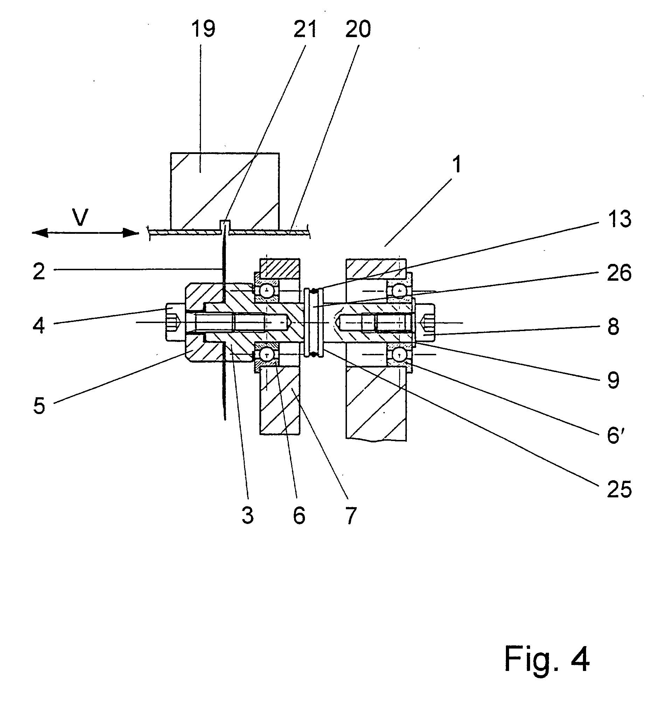

Eine zweite bevorzugte Ausführung der neurungsgemäßen Vorrichtung besteht gemäß Fig. 4 darin, dass die Konstruktionselemente zusätzlich einen Freilauf (nicht dargestellt) beinhalten, der zwischen den Wälzlagern (6, 6') im Bereich der zuvor beschriebenen umlaufenden Nut (14) angebracht ist. In diesem Fall umschlingt die Schnur (13) die Welle (3) nicht mehr direkt, sondern den auf den Außenring eines Freilaufs (nicht dargestellt) angebrachten, mit einer umlaufenden Nut (26) versehenen zusätzlichen Ring (25). Durch dies Anordnung wird erreicht, dass während der Rückzugsbewegung des Schlittens (11) in Stellung (S2) keine zur Rotation während des Schneidvorgangs gegenläufige Rotation des Schneidmessers (2) mehr erfolgt und jeder Schnittvorgang folglich an einem anderen Punkt am Umfang des Schneidmessers (2) beginnt und somit das Schneidmesser (2) vollkommen gleichmäßig verschleißt.

Die zuvor beschriebenen Vorrichtungen sind sowohl für ein gemeinsames Durchtrennen von Magnetband (20) und Vorspannband (nicht dargestellt), wie in der Einleitung beschrieben als auch für ein separates Durchtrennen nur des Magnetbandes (20) geeignet. Es versteht sich von selbst, daß die Anwendung der Vorrichtung nicht auf die Verarbeitung von Magnetbändern beschränkt ist, sondern auch bei der Konfektionierung aller anderen streifen- oder bandförmigen Medien vorteilhaft nutzbar ist.

## Patentansprüche

1. Vorrichtung (1) zum Abtrennen streifen- oder bandförmiger Medien in Montagemaschinen, vorzugsweise Magnetband in Einspulautomaten, im wesentlichen bestehend aus einer pneumatischen Linearführungseinheit (12) mit angebauten Hubbegrenzungseinheiten, wobei am Schlitten (11), dessen lineare Bewegungsrichtung quer zur Bewegungsrichtung (V) des Magnetbands (20) verläuft, ein Halter (7) angebracht ist, an dessen einem Ende ein Rundmesser (2) mittels kraftschlüssiger Verbindung auf einer über die Wälzlager (6, 6') rotierbar gelagerten Welle (3) fixiert ist, **dadurch gekennzeichnet, dass** die Linearbewegung des Schlittens (11) mittels Konstruktionselementen in eine Rotationsbewegung des Rundmessers (2) umgewandelt wird und wobei das Rundmesser (2) das Magnetband (20) querschneidet, während das Band auf einem Saugtisch (19) festgehalten wird.

2. Vorrichtung nach Anspruch 1, **dadurch gekennzeichnet, dass** das Rundmesser (2) in den freien Raum einer Nut (21) schneidet, welche an der dem Rundmesser (2) zugewandtenSeite des Saugtisches (19) angebracht ist.

3. Vorrichtung nach Anspruch 1 und 2, **dadurch gekennzeichnet, dass** die Konstruktionselemente ein Schnur/Feder-System (13, 15) beinhalten, wobei die Schnur(13) die Welle (3) in einer an dieser angebrachten Nut (14) umschlingt.

4. Vorrichtung nach Anspruch 3, **dadurch gekennzeichnet, daß** die Konstruktionselemente zusätzlich einen Freilauf beinhalten, wobei die Schnur (13) den zusätzlich auf den Außenring eines Freilauf angebrachten Ring (25) in einer umlaufende Nut (26) umschlingt.

5. Vorrichtung nach Anspruch 1, **dadurch gekennzeichnet**, die Wälzlager (6, 6') nahezu spielfrei einstellbar sind.
